Europäisches Patentamt

European Patent Office

Office européen des brevets

(19)

(11) Publication number: **0 457 744 B1**

(12) **EUROPEAN PATENT SPECIFICATION**

(45) Date of publication of patent specification :
05.10.94 Bulletin 94/40

(51) Int. Cl.⁵ : **F16H 61/02, F16H 63/44, F16H 59/66**

(21) Application number : **91850121.4**

(22) Date of filing : **10.05.91**

(54) **Method and arrangement for automatic selection of speed range in an electrically controlled pre-gearbox of a tractor or equivalent.**

(30) Priority : **14.05.90 FI 902399**

(43) Date of publication of application :
**21.11.91 Bulletin 91/47**

(45) Publication of the grant of the patent :
**05.10.94 Bulletin 94/40**

(84) Designated Contracting States :
**DE DK ES FR GB IT SE**

(56) References cited :
**EP-A- 0 240 901**
**GB-A- 2 154 679**
**US-A- 4 319 501**
**US-A- 4 967 355**

(73) Proprietor : **VALMET TRAKTORI OY**
**Tourulantie 12**
**SF-40100 Jyväskylä (FI)**

(72) Inventor : **Huuskonen, Pekka**
**Lohdonmutka 4**
**SF-40420 Jyskä (FI)**

(74) Representative : **Wallin, Bo-Göran et al**
**AWAPATENT AB,**
**Box 5117**
**S-200 71 Malmö (SE)**

EP 0 457 744 B1

## Description

The invention concerns a method for automatic selection of speed range in an electrically controlled pre-gearbox of a tractor or equivalent in a tractor or equivalent in which the power is transferred from the engine to the driving axle/axles through a driving clutch, through said twin-speed pre-gearbox, and through a multi-speed mechanical gearbox, in which method the speed of rotation of the engine as well as the position of the throttle pedal are measured so as to determine the engine speed corresponding to the position of said throttle pedal, and in which method the gearbox speed proportional to the speed of rotation of the driving wheels and the factual ground speed of the tractor are measured to determine the slippage of the driving wheels.

The invention also concerns a control system for automatic selection of speed range in an electrically controlled pre-gearbox of a tractor or equivalent in a tractor or equivalent in which the driving axle/axles is/are arranged to be driven by the engine through a driving clutch, through said twin-speed pre-gearbox, and through a mechanical multi-speed main gearbox, said system including detectors for measurement of the speed of rotation of the engine, of the gearbox speed proportional to the speed of rotation of the driving wheels, as well as of the factual ground speed of the tractor, detectors for determination of the position of the throttle pedal as well as for detecting the pressing of the driving-clutch pedal, and a programmable central unit, to which said detectors are arranged to feed the signals corresponding to the measurement data.

In conventional farm tractors, the power transmission construction has normally been accomplished so that the power is transferred to the rear wheels of the tractor from the gearbox through a differential gear permanently. The main gearbox usually comprises 1 to 6 mechanical main gears and, additionally, 1 to 4 speed ranges, all of said main gears being usable within each of said speed ranges. The engaging of all of these gears is normally carried out by disconnecting the input shaft of the gearbox from the engine by means of the driving clutch and by mechanically shifting the individual coupling rings in the gearbox to engage the desired gear. To-day, said coupling rings are normally such that, before the engagement proper of a gear, they equalize the differences in speed between the shafts to be engaged, i. e. carry out the synchronization. The drawback of such a gearbox is manifested when the gear must be switched in the middle of a working phase, in which case the traction is cut off as soon as the driving clutch is disconnected. Normally, the necessary change in the speed range is, however, very little, but, with such a conventional system, the tractor may even stop during the switching.

In view of eliminating the above deficiency and drawback, the transmissions have been additionally provided with a separate hydraulically controlled pre-gearbox of the planetary gear type, a so-called "instant gearbox", by whose means the speed of rotation and the torque of the input shaft of the gearbox can be vied by a certain step or by certain steps without interruption of the traction. As a rule, in such a pre-gearbox, only two different speed ranges are in use, one of which is a direct gear, whereas the other one is an either increasing or reducing speed range. However, such a pre-gearbox may also have 2 to 4 speed ranges.

In most types of work, an "instant gearbox" with two speed ranges is already adequate, because, when necessary, it permits a slight change in the speed range without interruption of the traction. The selection of the speed range is simple, for, in order to change from one speed range to the other, the driver just has to press an electric switch, whereby the hydraulic multi-disk clutches in the pre-gearbox take care of the changing of the range of transmission ratio. In conventional systems, the driver always makes the decision about the selection of speed range, on the basis of his observations of hearing, meter readings, or his feeling.

Even though the operation of the pre-gearbox and the selection of the speed ranges are in themselves easy, at his work the driver, however, often has many other things to do and adjustments to make, whereby there is not always a possibility for change of speed range at the correct time. Likewise, for example, out of these or some other reasons, the driver often drives in the "wrong" speed range, in which case the transmission is loaded excessively or the driving is otherwise uneconomical.

The object of the present invention is to provide an essential improvement over the prior-art solutions so that, during his work, the driver does not have to pay attention to changing of the transmission ratio of the pre-gearbox separately, but the system takes care of it automatically. In view of achieving this, the method in accordance with the invention is mainly characterized in that, in the method, the speed of rotation of a loaded engine with a corresponding position of the throttle pedal is compared with the speed of rotation of an unloaded engine, the factual slippage of the driving wheels is compared with a predetermined limit value, and, at the same time, it is examined if the speed of the tractor is increasing or decreasing at the particular time concerned, whereby, when the measured values are in a predetermined relationship to the pre-programmed values, the transmission ratio of the pre-gearbox is switched to a lower/higher speed range automatically.

On the other hand, the system in accordance with the invention is mainly characterized in that, in said central unit, the permitted percentage of slippage of the driving wheels as well as the values of speed of rotation of the engine corresponding to certain positions of the throttle pedal have been programmed in advance, and that the central unit is arranged to compare the detector data with the pre-programmed values so that the central unit switches the transmission ratio of the pre-gearbox to a lower/higher speed range when the detector data are in a predetermined ratio to the pre-programmed values.

By means of the invention, a number of remarkable advantages are obtained as compared with the prior-art solutions, and of these advantages, in this connection, e. g., the following should be stated. The method and the arrangement in accordance with the invention always keep the speed range of the pre-gearbox at the most appropriate level, thereby optimizing the efficiency and the operability of the transmission. The arrangement in accordance with the invention further provides the driver with information as to whether the transmission ratio of the pre-gearbox is adequate or whether a gear must also be switched in the main gearbox.

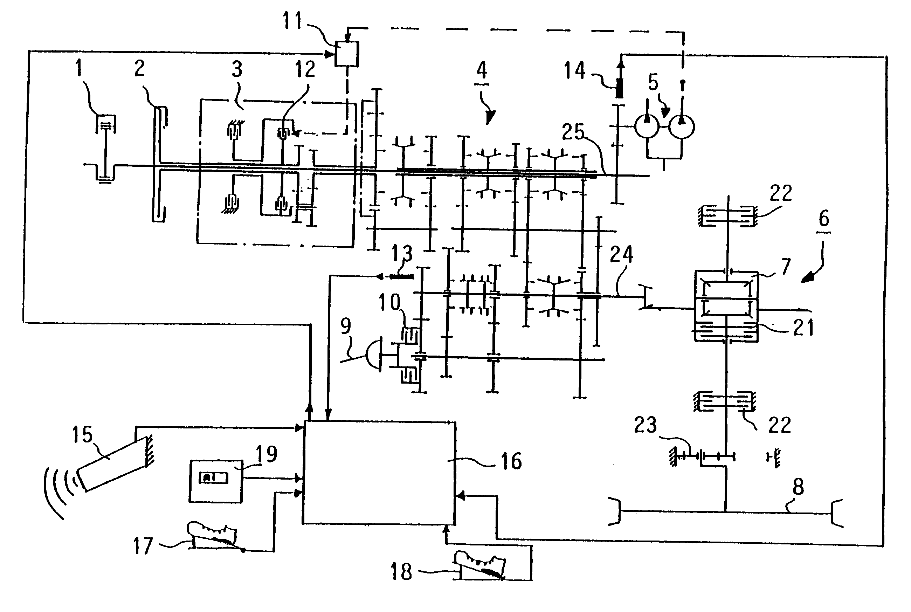

In the following, the invention will be described by way of example with reference to the figure in the accompanying drawing. The drawing is a schematic illustration of the power transmission system of a tractor or equivalent in which the automatic method and arrangement in accordance with the invention are applied.

In the figure in the drawing, the engine of the tractor is denoted schematically with the reference numeral 1, the driving clutch with the reference numeral 2, the gearbox with the reference numeral 4, and the hydraulic pump with the reference numeral 5. In the figure, it is additionally shown that a pre-gearbox 3, i.e. a so-called "instant gearbox", is fitted between the driving clutch 2 and the gearbox 4. The pre-gearbox 3 is a gearbox of the planetary gear type, wherein, in the embodiment shown in the figure, there are two different speed ranges, which can be engaged optionally by means of the hydraulic multi-disk clutch 12 of the pre-gearbox. In the embodiment shown in the figure, one of the transmission ratios of the instant gearbox 3 is direct, whereas, by means of the other transmission ratio, the output shaft of the instant gearbox 3 can be made to revolve at a slower speed of rotation.

Further, the power transmission system comprises a driving rear axle 6, which includes the differential gear 7 of the rear axle, which is provided with a differential lock 21 of the type of a multi-disk clutch. Further, in the conventional way, the rear axle 6 includes brakes 22 as well as hub gears 23 of the planetary gear type. One of the rear wheels, mounted on the rear axle, is denoted with the reference numeral 8 in the figure in the drawing. The power transmission system shown in the figure belongs to a four-wheel drive tractor, in which the power is transmitted to the front axle (not shown) from the gearbox 4 in the conventional way through a cardan shaft 9 and a hydraulically operated multi-disk clutch 10. With the exception of the brakes, the construction and the mode of operation of the front axle may be fully similar to the construction and the mode of operation of the rear axle. The switching on and off of the hydraulic multi-disk clutch 12 in the pre-gearbox 3, i. e. instant gearbox, is accomplished by means of a solenoid valve 11, which is shown schematically and which communicates with the hydraulic pump 5 so that said solenoid valve 11 allows the pressure provided by the hydraulic pump 5 to pass to the multi-disk clutch 12 of the pre-gearbox 3.

The arrangement in accordance with the invention for selection of the speed range of the pre-gearbox 3 includes a detector system, by whose means the control system can judge the necessity of changing the transmission ratio in each particular situation. First, the detector system comprises a first detector 13, which measures the speed of the gearbox so that the speed range of the gearbox 4 that is used does not affect the measurement result. In the arrangement in accordance with the figure, said first detector 13, which measures the speed of the gearbox 4, is arranged to measure the speed of rotation of the conical drive-wheel shaft 24 passing to the differential gear 7 of the rear axle. As the measurement result given by the first detector 13, the theoretical speed of the tractor is obtained. Secondly, the control system in accordance with the invention includes a second detector 14, which measures the speed of rotation of the engine 1. In the arrangement shown in the figure, said second detector 14 is placed in connection with the drive of the hydraulic pump 5 on the shaft 25, which is permanently connected to the crankshaft of the engine 1 so that it always revolves at the same speed as the engine 1. Thus, said second detector 14 measures the speed of rotation of the engine 1 irrespective of whether the driving clutch 2 is disconnected or connected.

The control system further includes a third detector 15, which is based, e.g., on the microwave technology and which measures the ground speed, i.e. the factual travel speed of the tractor. Further, the control system includes an analogical fourth detector 17, which measures the position of the throttle pedal and which determines the position of the throttle pedal in each particular situation precisely, as well as a fifth detector 18, which is connected to the driving-clutch pedal and which reports when the driving-clutch pedal is being pressed.

The control system further includes a programmable central unit 16 of the microprocessor type, to which all of the above detectors are connected so that they transmit the signals corresponding to their measurement data to the central unit 16. Also, the above solenoid valve 11 of the multi-disk clutch 12 of the pre-gearbox 3 is connected to the central unit 16 so that the central unit 16 gives the solenoid valve 11 the necessary command signals to disconnect or to connect the multi-disk clutch 12 of the pre-gearbox 3 for changing of the transmission ratio. The central unit 16 is provided with a device (not shown) by whose means the operator of the tractor can program the desired operation parameters for the control system.

The control system in accordance with the invention further includes an operation switch device, which is denoted with the reference numeral 19 and which includes the driver's operation switches and signal lamps, by whose means the mode of operation of the system can be selected. By means of one switch in the operation switch device 19, it is possible to select whether the driver wishes to use a fully manually controlled pre-gearbox 3 or whether a fully automatic operation is chosen. Manual control or positive control is needed when, out of some reason, it is desirable to force a certain speed range upon the pre-gearbox 3 irrespective of automation. By means of the other switch, i. e. manual-operation switch, it is selected exclusively which of the speed ranges of the pre-gearbox 3 is supposed to be used at each particular time. Thus, the switches in the operation switch device 19 operate so that, by means of one of the switches, automatic/manual operation of the pre-gearbox 3 is selected, and, by means of the other switch, with manual operation only, the speed range of the pre-gearbox 3 is selected. For automatic operation of the control system, additionally, two different control algorithms can be programmed for the central unit 16 in view of working duties of different types.

The principle of operation of the control system in accordance with the invention is as follows:

First, in the central unit 16 of the control system, in view of work duties of different types, two different control algorithms have been programmed, as was already stated above. These control algorithms may be programmed in the form of a table, which comprises several lines and six columns. The first column represents the position of the throttle pedal and the second column the engine 1 speed without load. On the other hand, the number of lines in the table states the size of the steps with which these values are given. Sufficient precision of automatic control is obtained with a table in which the position of the throttle pedal and the speed of rotation of the engine without load are given at intervals of, e.g., 50 revolutions. In the third column in the table, the engine speed is fitted at which the pre-gearbox is switched down to a lower speed range, and in the fourth column the engine speeds are fitted at which the pre-gearbox is restored to a range of higher speed. In a corresponding way, in the fifth and sixth columns in the table, data have been programmed concerning engine speeds, in the same way as in the third and fourth columns in the table, but with different engine speed values. Thus, the table includes two pairs of columns that are meant for different working duties to illustrate the properties that are required from the power transmission. By means of the operation switch device 19, the driver can select which of the pairs of columns is used by the central unit 16 of the control system.

As was stated above, the detectors 13,14,15,17,18 feed the signals corresponding to the values measured by them constantly to the central unit 16. The data coming from the first detector 13, which measures the gearbox speed, are stored by the control unit constantly in its memory, transferring the preceding value that was given by the first detector 13 to a separate memory position. The central unit 16 compares the next value with said preceding value and, by means of the comparison of these two values, the central unit 16 has a constant information on whether the tractor is in an accelerating or retarding movement.

When the tractor is driven, the central unit 16 constantly observes the position of the throttle pedal on the basis of the data coming from the analogical fourth detector 17, and controls the pre-gearbox on the basis of the data received from the fourth detector 17 and of the table stored in the memory of the central unit. When the throttle pedal has remained in the same position for a certain period of time, the central unit 16 checks in the table what value the factual speed of rotation of the engine 1 corresponds to. If the engine speed corresponds to the value of the lower transmission ratio of the pre-gearbox 3 (column 3 or 5 in the table, as selected), the central unit 16 selects this speed range, and if the engine speed corresponds to the value of the higher transmission ratio (column 4 or 6 in the table, as selected), the central unit 16 selects this speed range. Thus, the principle of operation of the control system is to observe how much the engine 1 speed is reduced when the load is increased while the position of the throttle pedal remains unchanged. If this lag, i.e. reduction in the engine speed, becomes excessively large, the pre-gearbox 3 is switched down. As was already stated above, by means of the operation switch device, out of the alternative two pairs of columns in the table, the driver can select the pair that is best suitable for the working duty.

The automatic control system further includes a control logic by whose means an interfering operation of the control described above is prevented when a new transmission ratio is selected in the mechanical gearbox 4. On the basis of what was described above, the control system knows whether the tractor is in an accelerating or retarding movement. As soon as the clutch pedal is depressed, the central unit 16 receives information on this from the fifth detector 18, whereupon the central unit examines said acceleration/retardation factor and, at the moment of switching, selects the slower speed range from the pre-gearbox 3 if the tractor was accelerating. On the other hand, if the tractor was slowing down, the central unit 16 gives a command to select the transmission ratio of higher speed from the pre-gearbox 3. By means of this procedure, it is ensured that, when a higher gear is selected in the gearbox 4, the transmission ratio of the pre-gearbox 3 is in the range of lower speed, in which case the operation of the system is logical, and no switching of the transmission ratio in the instant gearbox 3 back and forth takes place. In the corresponding way, when a lower gear is selected in the gearbox 4, the pre-gearbox 3 is switched to the higher speed range, whereby, as a whole, the smallest possible step of transmission ratio downwards is obtained. The signal lamp on the operation switch device 19 tells the operator what speed range is engaged in the pre-gearbox 3 at each particular time and, thus, the driver knows when a lower or higher transmission ratio is needed in the mechanical gearbox 4.

Moreover, the central unit 16 of the automatic control system constantly monitors the slippage of the tractor wheels by means of the third detector 15, which measures the ground speed, and the first detector 13, which measures the gearbox speed. For this purpose, in advance, the operator programs an operation parameter in the central unit 16, which parameter acts as an aid for the automatic control. Said operation parameter is a simple percentage, which states the difference in speed between the ground speed of the tractor and the gearbox speed as a percentage. When this difference in speed is 0, the wheels of the tractor have no slippage, in which case said parameter is 0. When the parameter is higher than 0, the wheels of the tractor slip. Thus, the operator programs the desired slippage percentage in the central unit 16, and, based on the information provided by the first detector 13 and by the third detector 15, if the slippage of the tractor wheels is higher than this programmed percentage, the central unit 16 gives the solenoid valve 11 a command to switch the pre-gearbox 3 to the transmission ratio of lower speed. The transmission ratio of the pre-gearbox 3 is not switched to the higher speed range as long as the programmed slippage percentage is exceeded. By means of this procedure, the slippage of the wheels is not increased unduly by increasing the transmission ratio of the power transmission.

The factual value of wheel slippage percentage, which is required by the central unit 16, is obtained by means of the first detector 13 and the third detector 15 simply from the following formula:

$$P = \frac{\text{gearbox speed} - \text{ground speed}}{\text{ground speed}} \cdot 100\%$$

Moreover, the central unit 16 of the control system is arranged to switch the transmission ratio of the pre-gearbox to the lower speed range always when the gearbox speed reported by the first detector 13 is 0. The automatic control system further includes a delay logic, by whose means oscillation of the transmission ratio of the pre-gearbox 3 is prevented.

## Claims

1. Method for automatic selection of speed range in an electrically controlled pre-gearbox of a tractor or equivalent in a tractor or equivalent in which the power is transferred from the engine (1) to the driving axle/axles (6) through a driving clutch (2), through said twin-speed pre-gearbox (3), and through a multi-speed mechanical gearbox (4), in which method the speed of rotation of the engine (1) as well as the position of the throttle pedal are measured so as to determine the engine speed corresponding to the position of said throttle pedal, and in which method the gearbox speed proportional to the speed of rotation of the driving wheels (8) and the factual ground speed of the tractor are measured to determine the slippage of the driving wheels, **characterized** in that, in the method, the speed of rotation of a loaded engine (1) with a corresponding position of the throttle pedal is compared with the speed of rotation of an unloaded engine (1), the factual slippage of the driving wheels (8) is compared with a predetermined limit value, and, at the same time, it is examined if the speed of the tractor is increasing or decreasing at the particular time concerned, whereby, when the measured values are in a predetermined relationship to the pre-programmed values, the transmission ratio of the pre-gearbox (3) is switched to a lower/higher speed range automatically.

2. Method as claimed in claim 1, **characterized** in that, when the speed of rotation of the engine (1) is lowered to a certain extent while the position of the throttle pedal remains unchanged, the transmission ratio of the pre-gearbox (3) is switched to a lower speed range.

3. Method as claimed in claim 1 or 2, **characterized** in that, when the speed of rotation of the engine (1) is increased to a certain extent while the position of the throttle pedal remains unchanged, the transmission ratio of the pre-gearbox (3) is switched to a higher speed range.

4. Method as claimed in any of the preceding claims, **characterized** in that, in the method, additionally, the pressing of the driving-clutch pedal and the changing of the transmission ratio in the mechanical main gearbox (4) are studied so that, when the clutch pedal is pressed, the transmission ratio of the pre-gearbox (3) is switched to a lower speed range if the tractor is in an accelerating movement at the particular moment concerned.

5. Method as claimed in any of the preceding claims, **characterized** in that, when the clutch pedal is pressed and when the transmission ratio is changed in the mechanical main gearbox (4), the transmission ratio of the pre-gearbox (3) is switched to a higher speed range if the tractor is in a retarding movement at the particular moment concerned.

6. Control system for automatic selection of speed range in an electrically controlled pre-gearbox of a tractor or equivalent in a tractor or equivalent in which the driving axle(6)/axles is/are arranged to be driven by the engine (1) through a driving clutch (2), through said twin-speed pre-gearbox (3), and through a mechanical multi-speed main gearbox (4), said system including detectors (13, 14, 15) for measurement of the speed of rotation of the engine (1), of the gearbox speed proportional to the speed of rotation of the driving wheels (8), as well as of the factual ground speed of the tractor, detectors (17,18) for determination of the position of the throttle pedal as well as for detecting the pressing of the driving-clutch pedal, and a programmable central unit (16), to which said detectors (13,14,15,17,18) are arranged to feed the signals corresponding to the measurement data, **characterized** in that, in said central unit (16), the permitted percentage of slippage of the driving wheels (8) as well as the values of speed of rotation of the engine (1) corresponding to certain positions of the throttle pedal have been programmed in advance, and that the central unit (16) is arranged to compare the detector data with the pre-programmed values so that the central unit (16) switches the transmission ratio of the pre-gearbox (3) to a lower/higher speed range when the detector data are in a predetermined ratio to the pre-programmed values.

7. Control system as claimed in claim 6, **characterized** in that the control system is arranged to switch the transmission ratio of the pre-gearbox (3) to a lower speed range if the factual slippage of the driving wheels (8) exceeds the pre-programmed limit value.

8. Control system as claimed in claim 6 or 7, **characterized** in that the control system is arranged to compare the change in the speed of rotation of the loaded engine (1) with a certain position of the throttle pedal and to switch the transmission ratio of the pre-gearbox (3) to a lower speed range if the speed of rotation of the engine (1) is lowered to below the pre-programmed limit value and, correspondingly, to switch the transmission ratio of the pre-gearbox (3) to a higher speed range if the speed of rotation of the engine (1) rises beyond the preset limit value.

**Patentansprüche**

1. Verfahren zum automatischen Auswählen des Getriebegangs in einem elektrisch gesteuerten Vorschaltgetriebe eines Traktors oder dergleichen in einem Traktor oder dergleichen, bei dem die Kraft von der Maschine (1) zu der Antriebsachse/den Antriebsachsen (6) über eine Antriebskupplung (2), durch das zweistufige Vorschaltgetriebe (3) und über ein mehrstufiges mechanisches Schaltgetriebe (4) übertragen wird, bei welchem Verfahren die Rotationsgeschwindigkeit der Maschine (1) als auch die Stellung des Drosselpedals gemessen werden, um so die der Stellung des Drosselpedals entsprechende Maschinengeschwindigkeit zu bestimmen, und bei welchem Verfahren die Schaltgetriebegeschwindigkeit, die proportional zur Rotationsgeschwindigkeit der Antriebsräder (8) ist, und die tatsächliche Geschwindigkeit des Traktors über dem Grund gemessen werden, um den Schlupf der Antriebsräder zu bestimmen,
dadurch **gekennzeichnet**,
daß in dem Verfahren die Rotationsgeschwindigkeit einer belasteten Maschine (1) zusammen mit einer entsprechenden Stellung des Drosselpedals mit der Rotationsgeschwindigkeit einer unbelasteten Maschine (1) verglichen wird, daß der tatsächliche Schlupf der Antriebsräder (8) mit einem vorbestimmten Grenzwert verglichen wird, und daß gleichzeitig überprüft wird, ob die Geschwindigkeit des Traktors genau zu der entsprechenden Zeit ansteigt oder abfällt, wobei, wenn die gemessenen Werte in einer vorbestimmten Beziehung zu den vorprogrammierten Werten stehen, das Übersetzungsverhältnis des Vorschaltgetriebes (3) automatisch in einen niedrigeren/höheren Getriebegang umgeschaltet wird.

2. Verfahren nach Anspruch 1,
dadurch **gekennzeichnet**,
daß, wenn die Rotationsgeschwindigkeit der Maschine (1) bis zu einem gewissen Grad abgesenkt worden ist, während die Stellung des Drosselpedals unverändert bleibt, das Übersetzungsverhältnis des Vorschaltgetriebes (3) in einen niedrigeren Getriebegang geschaltet wird.

3. Verfahren nach Anspruch 1 oder 2,
dadurch **gekennzeichnet**,
daß wenn die Rotationsgeschwindigkeit der Maschine (1) zu einem gewissen Grad erhöht wird, während die Position des Drosselpedals unverändert bleibt, das Übersetzungsverhältnis des Vorschaltgetriebes (3) auf einen höheren Getriebegang geschaltet wird.

4. Verfahren nach einem der vorhergehenden Ansprüche,
dadurch **gekennzeichnet**,
daß in dem Verfahren zusätzlich das Drücken des Antriebskupplungspedals und der Wechsel des Übersetzungsverhältnisses in dem mechanischen Hauptschaltgetriebe (4) untersucht werden, so daß, wenn das Kupplungspedal gedrückt wird, das Übersetzungsverhältnis des Vorschaltgetriebes (3) auf einen niedrigeren Getriebegang geschaltet wird, wenn sich der Traktor genau zu dem entsprechenden Zeitpunkt in einer beschleunigten Bewegung befindet.

5. Verfahren nach einem der vorhergehenden Ansprüche,
dadurch **gekennzeichnet**,
daß wenn das Kupplungspedal gedrückt wird, und wenn das Übersetzungsverhältnis in dem mechanischen Hauptschaltgetriebe (4) geändert wird, das Übersetzungsverhältnis des Vorschaltgetriebes (3) in einen höheren Getriebegang geschaltet wird, wenn der Traktor sich genau zu dem entsprechenden Zeitpunkt in einer Bremsbewegung befindet.

6. Steuerungssystem für die automatische Wahl des Getriebegangs in einem elektrisch gesteuerten Vorschaltgetriebe eines Traktors oder dergleichen in einem Traktor oder dergleichen, bei dem die Antriebsachse (6)/Antriebsachsen eingerichtet ist sind, um von der Maschine (1) über eine Antriebskupplung (2), über das zweistufige Vorschaltgetriebe (3) und über ein mechanisches mehrstufiges Hauptschaltgetriebe (4) angetrieben zu werden, wobei das System Detektoren (13,14,15) zur Messung der Rotationsgeschwindigkeit der Maschine (1), der Getriebegeschwindigkeit, die proportional zur Rotationsgeschwindigkeit der Antriebsräder (8) ist, als auch der tatsächlichen Geschwindigkeit des Traktors über Grund, Detektoren (17,18) zur Bestimmung der Stellung des Drosselpedals als auch zum Erfassen des Drückens des Antriebskupplungspedals und eine programmierbare Zentraleinheit (16), wobei die Detektoren (13,14,15,17,18) eingerichtet sind, die den gemessenen Daten entsprechenden Signale zu dieser Zentraleinheit (16) zu übertragen,
dadurch **gekennzeichnet**,
daß in der Zentraleinheit (16) der zulässige Prozentwert des Schlupfes der Antriebsräder (8) als auch die Werte der Rotationsgeschwindigkeit der Maschine (1) entsprechend bestimmten stellungen des Drosselpedals vorab programmiert worden sind, und daß die Zentraleinheit (16) vorgesehen ist, um die detektierten Daten mit den vorprogrammierten Werten zu vergleichen, so daß die Zentraleinheit (16) das Übersetzungsverhältnis des Vorschaltgetriebes (3) in einen niedrigeren/höheren Getriebegang schaltet, wenn die detektierten Daten in einem vorbestimmten Verhältnis zu den vorprogrammierten Werten stehen.

7. Steuerungssystem nach Anspruch 6,
dadurch **gekennzeichnet**,
daß das Steuerungssystem vorgesehen ist, das Übersetzungsverhältnis des Vorschaltgetriebes (3) in einen niedrigeren Getriebegang zu schalten, wenn der tatsächliche Schlupf der Antriebsräder (8) den vorprogrammierten Grenzwert überschreitet.

8. Steuerungssystem nach Anspruch 6 oder 7,
dadurch **gekennzeichnet**,
daß das Steuerungssystem vorgesehen ist, eine Änderung der Rotationsgeschwindigkeit der belasteten Maschine (1) mit einer bestimmten Stellung des Drosselpedals zu vergleichen und das Übersetzungsverhältnis des Vorschaltgetriebes (3) in einen niedrigeren Getriebegang zu schalten, wenn die Rotationsgeschwindigkeit der Maschine (1) unter den vorprogrammierten Grenzwert abgesenkt wird, und, entsprechend, das Übersetzungsverhältnis des Vorschaltgetriebes (3) in einen höheren Getriebegang zu schalten, wenn die Rotationsgeschwindigkeit der Maschine (1) über einen vorbestimmten Grenzwert ansteigt.

**Revendications**

1. Procédé de sélection automatique de la vitesse d'une pré-boîte de vitesses à commande électrique d'un tracteur ou équivalent, tracteur ou équivalent dans lequel la puissance est transmise du moteur (1) à l'essieu ou aux essieux d'entraînement (6) par l'intermédiaire d'un embrayage (2), de ladite pré-boîte de vitesses (3) à deux vitesses et d'une boîte de vitesses mécanique à vitesses multiples (4), procédé dans lequel la vitesse de rotation du moteur (1) de même que la position de la pédale du papillon des gaz sont mesurées pour déterminer la vitesse du moteur correspondant à la position de ladite pédale du papillon des gaz, et procédé dans lequel sont mesurées la vitesse de la boîte de vitesses proportionnelle à la vitesse de rotation des roues motrices (8) et la vitesse effective du tracteur sur le sol pour déterminer le patinage des roues motrices, caractérisé en ce que, dans ce procédé, la vitesse de rotation d'un moteur en charge (1) avec une position correspondante de la pédale du papillon des gaz est comparée avec la vitesse de rotation du moteur (1) non chargé, le patinage effectif des roues motrices (8) est comparé à une valeur limite prédéterminée, et dans le même temps un examen est fait pour savoir si la vitesse du tracteur augmente ou diminue au moment particulier concerné, ce grâce à quoi, quand les valeurs mesurées présentent une relation prédéterminée avec les valeurs préprogrammées, le rapport de transmission de la pré-boîte de vitesses (3) passe automatiquement à une vitesse supérieure ou inférieure.

2.  Procédé selon la revendication 1, caractérisé en ce que lorsque la vitesse de rotation du moteur (1) baisse dans une certaine mesure alors que la position de la pédale du papillon des gaz reste inchangée, le rapport de transmission de la pré-boîte de vitesses (3) est passé à une vitesse inférieure.

3.  Procédé selon la revendication 1 ou 2, caractérisé en ce que lorsque la vitesse de rotation du moteur (1) augmente dans une certaine mesure quand la position de la pédale du papillon des gaz reste inchangée, le rapport de transmission de la pré-boîte de vitesses (3) est passée à une vitesse supérieure.

4.  Procédé selon l'une quelconque des revendications précédentes, caractérisé en ce que, dans le procédé, la pression exercée sur la pédale de débrayage et le changement du rapport de transmission dans la boîte de vitesses mécanique principale (4) sont en outre étudiés pour que lorsque la pédale de débrayage est pressée, le rapport de transmission de la pré-boîte de vitesses (3) soit passé à une vitesse inférieure si le tracteur effectue un mouvement d'accélération au moment particulier concerné.

5.  Procédé selon l'une quelconque des revendications précédentes, caractérisé en ce que lorsque la pédale de débrayage est pressée et lorsque le rapport de transmission est modifié dans la boîte de vitesses mécanique principale (4), le rapport de transmission de la pré-boîte de vitesses (3) est passé à une vitesse supérieure si le tracteur effectue un mouvement de décélération au moment particulier concerné.

6.  Système de commande pour la sélection automatique d'une vitesse dans la pré-boîte de vitesses à commande électrique d'un tracteur ou équivalent, tracteur ou équivalent dans lequel l'essieu ou les essieux (6) d'entraînement est/sont agencés pour être entraînés par le moteur (1) par l'intermédiaire d'un embrayage (2), de ladite pré-boîte de vitesses à deux vitesses (3) et d'une boîte de vitesses principale mécanique à vitesses multiples (4), ledit système comprenant des détecteurs (13, 14, 15) pour la mesure de la vitesse de rotation du moteur (1), de la vitesse de la boîte de vitesses proportionnelle à la vitesse de rotation des roues motrices (8) de même que de la vitesse effective sur le sol du tracteur, des détecteurs (17, 18) pour détecter la position de la pédale du papillon des gaz de même que la détection d'une pression exercée sur la pédale de débrayage, et une unité centrale programmable (16) à laquelle lesdits détecteurs (13, 14, 15, 17, 18) sont prévus pour envoyer des signaux correspondant aux données de mesure, caractérisé en ce que dans ladite unité centrale (16), le pourcentage de patinage permis des roues motrices (8) de même que les valeurs de la vitesse de rotation du moteur (1) correspondant à certaines positions de la pédale du papillon des gaz ont été programmées à l'avance, et en ce que l'unité centrale (16) est agencée pour comparer les données des détecteurs avec les valeurs préprogrammées de manière que l'unité centrale (16) fasse passer le rapport de transmission de la pré-boîte de vitesses (3) à une vitesse inférieure/supérieure quand les données des détecteurs présentent un rapport prédéterminé avec les valeurs préprogrammées.

7.  Système de commande selon la revendication 6, caractérisé en ce que le système de commande est agencé pour faire passer le rapport de transmission de la pré-boîte de vitesses (3) à une vitesse inférieure si le patinage effectif des roues motrices (8) dépasse la valeur limite préprogrammée.

8.  Système de commande selon la revendication 6 ou 7, caractérisé en ce que le système de commande est agencé pour comparer la modification de la vitesse de rotation du moteur (1) en charge avec une certaine position de la pédale du papillon des gaz et pour faire passer le rapport de transmission de la pré-boîte de vitesses (3) à une vitesse inférieure si la vitesse de rotation du moteur (1) baisse au-dessous de la valeur limite préprogrammée, et de façon correspondante pour faire passer le rapport de transmission de la pré-boîte de vitesses (3) à une vitesse supérieure si la vitesse de rotation du moteur (1) monte au-delà de la valeur limite préétablie.

EP 0 457 744 B1

9